Europäisches Patentamt

European Patent Office

Office européen des brevets

(19)

(11) Numéro de publication: **0 087 338 B1**

(12) **FASCICULE DE BREVET EUROPEEN**

(45) Date de publication du fascicule du brevet:
**08.10.86**

(51) Int. Cl.⁴: **C 01 B 17/45**

(21) Numéro de dépôt: **83400240.4**

(22) Date de dépôt: **04.02.83**

(54) **Procédé continu de fabrication de l'hexafluorure de soufre dans un réacteur à flamme.**

(30) Priorité: **19.02.82 FR 8202748**

(43) Date de publication de la demande:
**31.08.83 Bulletin 83/35**

(45) Mention de la délivrance du brevet:
**08.10.86 Bulletin 86/41**

(84) Etats contractants désignés:
**BE CH DE FR GB IT LI NL SE**

(56) Documents cités:
**FR - A - 1 445 502**
**FR - A - 1 555 940**

(73) Titulaire: **ATOCHEM, 4 & 8, Cours Michelet La Défense 10, F-92800 Puteaux (FR)**

(72) Inventeur: **Jaccaud, Michel, 38 bis, rue des Granges, F-69005 Lyon (FR)**
Inventeur: **Ducouret, André Jean François, 4, rue des Jonquilles, F-84100 Orange (FR)**

ACTORUM AG

## Description

La présente invention concerne un procédé continu pour la fabrication de l'hexafluorure de soufre par réaction entre le fluor et le soufre élémentaire liquide dans un réacteur à flamme.

L'hexafluorure de soufre est un gaz, dans les conditions normales de température et de pression, qui jouit de remarquables propriétés chimiques et électriques. Son inertie chimique, jointe à une excellente rigidité diélectrique et à des propriétés d'extinction de l'arc électrique de coupure, lui a ouvert de nombreux débouchés comme gaz isolant, particulièrement dans les équipements électriques à haute tension.

La fabrication industrielle de l'hexafluorure de soufre par combinaison de soufre et du fluor gazeux a été décrite par W.C. SCHUMB dans Industrial Engineering Chemistry, 39, 421–423 (1947). Dans ce procédé on injecte le fluor gazeux au-dessus d'un bain de soufre fondu. La vapeur de soufre s'enflamme spontanément dans le fluor et l'énergie de la combustion entretient la vaporisation du soufre.

Malgré sa simplicité, ce procédé présente trois inconvénients majeurs:

– une faible productivité, due à la difficulté de maîtriser les problèmes thermiques dès que les quantités de réactifs deviennent un peu importantes,

– une fiabilité insuffisante, nécessitant de fréquentes interventions du personnel d'exploitation,

– formation de quantités importantes de sous-fluorures $S_2F_2$, $SF_4$ et $S_2F_{10}$, qui diminue le taux de transformation du fluor et du soufre en hexafluorure et oblige à des traitements de purification d'autant plus complexes que le pentafluorure $S_2F_{10}$ est très toxique. De tels traitements sont décrits par exemple dans l'article de W.C. SCHUMB déjà cité et dans le brevet français n° 2 261 222.

Pour pallier en partie ces inconvénients, le brevet français n° 1 433 953 a proposé un type spécial de réacteur, qui permet de maintenir dans une chambre de combustion des proportions de fluor et de vapeurs de soufre très voisines de la stoechiométrie. Malgré sa complexité ce dispositif ne permet pas d'éviter la production de sous-fluorures de soufre.

Dans le brevet français n° 1 445 502 est décrit un brûleur qui permet d'effectuer la réaction entre le fluor gazeux et du soufre ou des composés sulfurés, comme l'acide sulfhydrique ou le sulfure de carbone, sous forme de vapeurs ou sous forme de particules solides ou de gouttelettes liquides en suspension dans un courant gazeux inerte, qui peut être constitué par l'hexafluorure de soufre lui-même. L'utilisation de composés sulfurés entraîne une surconsommation de fluor et la formation de sous-produits indésirables comme l'acide fluorhydrique ou le tétrafluorométhane. Dans le cas de l'utilisation de gouttelettes de soufre liquide en suspension dans un courant gazeux inerte, il est très difficile de régler correctement le débit de soufre, ce qui entraîne la formation de sous-fluorures lorsque le fluor est en défaut. De plus la dilution par le gaz inerte influence défavorablement la cinétique de réaction.

Le brevet français n° 2 387 905 indique que l'utilisation de soufre à l'état liquide conduit à la formation de quantités relativement importantes de sous-fluorures et que l'hexafluorure de soufre obtenu contient des vapeurs de soufre, qui posent des problèmes d'obstruction des canalisations en aval du réacteur. Il préconise donc l'utilisation de soufre à l'état de vapeur, qui est véhiculé au moyen d'un gaz porteur inerte, saturé par passage à travers un appareil contenant du soufre fondu à une température comprise entre 250 et 500 °C, et surchauffé ensuite entre 300 et 550 °C. Un courant du même gaz inerte, qui peut être de l'hexafluorure de soufre recyclé, permet de détacher la flamme de la buse d'introduction du soufre.

Ce procédé a l'inconvénient d'imposer un niveau de température très élevé (300 à 500 °C) sur la ligne d'alimentation en soufre et, comme le précédent, il implique l'utilisation d'un gaz inerte ou le recyclage d'une partie importante de l'hexafluorure de soufre produit. La teneur en gaz inerte est encore augmentée dans ce procédé par la nécessité de protéger la buse d'alimentation en soufre.

Contrairement aux enseignement de l'art antérieur, la demanderesse a découvert qu'il est possible d'assurer dans des conditions très satisfaisantes la réaction entre le fluor gazeux et le soufre liquide pour produire en continu un hexafluorure de soufre de très haute qualité, sans utiliser aucun gaz vecteur pour l'alimentation en soufre.

Le procédé selon l'invention consiste essentiellement à pulvériser sous pression hydraulique le soufre fondu au sommet d'un réacteur tubulaire en même temps que l'on injecte en tête de réacteur du fluor gazeux.

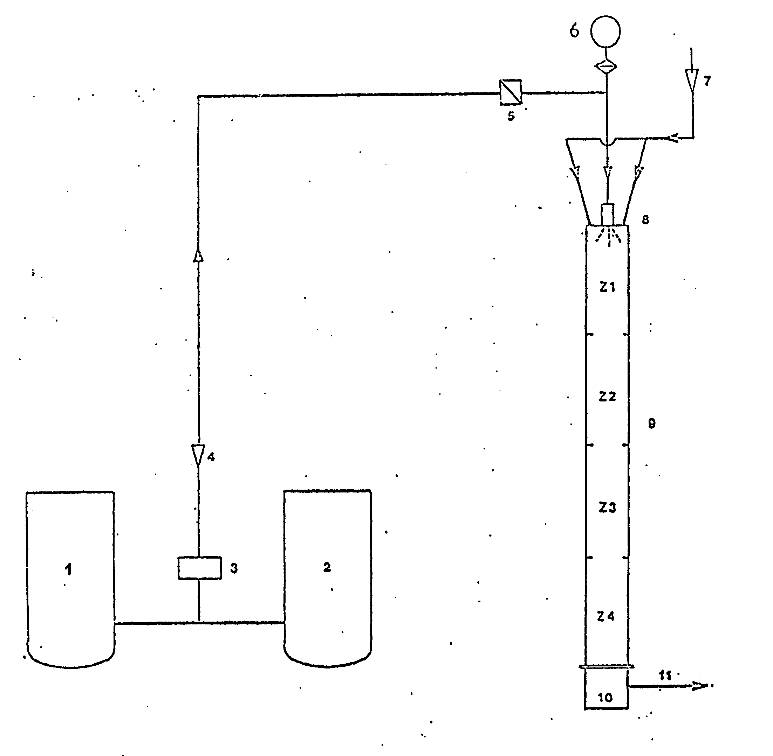

La planche unique schématise un mode de réalisation de ce procédé. Le soufre est fondu dans les fondoirs 1 et 2, qui sont des récipients en acier inoxydable, chauffés par une double enveloppe alimentée en vapeur à 9 bars. Ces fondoirs sont utilisés alternativement, l'un étant en phase de fusion pendant que l'autre est en service. Un jeu de vannes permet de passer d'un fondoir à l'autre sans interruption du débit de soufre liquide.

Le soufre fondu est véhiculé par une pompe 3, qui est de préférence une pompe à engrenages, dont le corps en acier inoxydable est chauffé par une souble enveloppe, où circule de la vapeur à 9 bars.

Le débit de soufre liquide est mesuré par un débitmètre 4, qui peut être constitué par exemple par un rotamètre à tube de verre calibré et flotteur en acier inoxydable. Dans un mode de réalisation préféré, la position du flotteur du rotamètre est repérée au moyen d'un couplage magnétique. Le signal émis par le débitmètre est repris sur un proportionneur couplé à un régulateur, qui commande la pression du fluor en amont de la tuyère 8. Le dispositif 7 correspondant à l'ensemble proportionneur-régulateur permet ainsi d'asservir le débit de fluor au débit du soufre liquide.

Le soufre fondu passe à travers une bougie filtrante 5, qui le débarrasse de toutes les particules solides qu'il peut éventuellement contenir.

La pression de refoulement de la pompe 3 est mesurée par un manomètre à séparateur 6.

Toutes les canalisations de circulation du soufre fondu sont en acier inoxydable et sont doublées de canalisations de vapeur pour assurer le contrôle de la température du soufre. Ce contrôle est un paramètre essentiel du procédé, car la viscosité du soufre liquide varie très rapidement entre 150 °C, où elle est de 0,007 Pa.s seulement, et 165 °C, où elle atteint 16 Pa.s.

La température du soufre fondu est avantageusement maintenue entre 145 et 158 °C, domaine correspondant très sensiblement au minimum de viscosité. Cette basse température de l'alimentation en soufre constitue un avantage économique important du procédé.

Le réacteur 9 est constitué d'un tube en Monel, disposé verticalement et possédant un rapport longueur/diamètre d'environ 12. Il est refroidi par une double enveloppe, disposée en quatre zones Z1, Z2, Z3 et Z4, dans lesquelles on peut faire circuler par un ventilateur de l'air de refroidissement. La productivité du réacteur est augmentée si l'on pulvérise de l'eau dans l'air alimentant les trois zones supérieures de la double enveloppe du réacteur. Le refroidissement peut également être assuré par une circulation d'eau dans la double enveloppe. La température de la paroi extérieure du réacteur est mesurée au milieu de chaque zone.

L'extrémité supérieure du réacteur 9 porte le dispositif d'introduction des réactifs. Le soufre fondu est pulvérisé dans le réacteur par un injecteur, qui peut être une simple pièce métallique percée d'un trou de 0,3 à 1 mm de diamètre, mais qui est plus avantageusement un pulvérisateur classique en acier inoxydable, pulvérisant en cône creux.

Le pulvérisateur est de préférence incorporé à la base d'un tube à double enveloppe, où circule de la vapeur, ce qui permet d'éviter que la chaleur dégagée par la combustion du soufre dans le fluor provoque une augmentation de la viscosité du soufre et limite son débit.

Le fluor est amené en tête du réacteur 9 par deux tubulures en Monel situées de part et d'autre du pulvérisateur à soufre. Son débit est de préférence asservi au débit de soufre, de manière à avoir un excès de fluor de 1 à 5% par rapport à la stoechiométrie de la réaction produisant l'hexafluorure de soufre.

L'extrémité inférieure du réacteur 9 est raccordée par brides à un pot à résidus 10, de même diamètre que le réacteur. La température mesurée à ce niveau donne la température de sortie des gaz, qui sont envoyés par la tubulure 11 dans un système classique d'épuration, comprenant une colonne de lavage par une solution aqueuse de soudre ou de potasse caustique, pour éliminer les impuretés hydrolysables, un craqueur avec garnissage de nickel opérant la dismutation à 400–450 °C du pentafluorure $S_2F_{10}$ en tétrafluorure et en hexafluorure, une autre colonne de lavage par une solution aqueuse de soudre ou de potasse caustique et une colonne de lavage à l'eau. Les gaz sont ensuite séchés sur des tamis moléculaires, comprimés et rectifiés pour éliminer les inertes, tels que l'oxygène, l'azote et le tétrafluorométhane.

L'exemple suivant, donné à titre non limitatif, illustre la mise en œuvre du procédé selon l'invention dans l'appareillage qui vient d'être décrit.

Exemple

Les fondoirs à soufre 1 et 2 ont chacun une capacité utile de 94 litres. La pompe à soufre 3 assure un débit de soufre fondu de 7,75 kg/h, correspondant à la production d'environ 35 kg/h d'hexafluorure de soufre. Le pulvérisateur a un orifice de 0,6 mm de diamètre. La pression sur le pulvérisateur est de 2,7–2,8 bars pendant les trois premiers jours de fonctionnement, et s'abaisse à 1,4–1,5 bar pendant le reste de l'essai, qui a duré au total 435 heures. La température du soufre à l'injecteur est maintenue vers 130 °C. Le fluor est injecté par deux tubes en MONEL de diamètre 10 × 12 mm. Son débit, asservi au débit de soufre, représente un excès de 1,5 à 2% par rapport à la stoechiométrie.

Le réacteur est un tube en MONEL de 6 mm d'épaisseur, 208 mm de diamètre intérieur et 2 500 mm de hauteur. Son refroidissement est assuré par une circulation d'eau à 13 °C dans les doubles-enveloppes des zones Z1, Z2 et Z3. La zone Z4 n'est pas refroidie. Les températures de parois externes sont de 25 °C pour la zone Z1, 50 °C pour la zone Z2, 30 °C pour la zone Z3 et 270 °C pour la zone Z4. La température de sortie des gaz est de 335 °C.

L'analyse des gaz sortant du réacteur est effectuée en continu par chromatographie. La teneur en gaz inertes (azote et oxygène) reste très inférieure à 0,5%. La teneur en fluor se maintient entre 2 et 4%. La chromatographie en ligne ne permet pas de détecter de sous-fluorures tels que $SF_4$. Une analyse chromatographique spéciale montre que la teneur en $S_2F_{10}$ est de 5 ppm. Toutes les 10 heures environ, les gaz sont analysés par spectrographie infra-rouge: on ne détecte que des traces, non décelables en chromatographie, de $CF_4$, $SOF_2$, $SF_4$ et $SOF_4$.

A la fin de l'essai, le rendement en hexafluorure de soufre s'établit à 96,3% sur le fluor et à 98,8% sur le soufre.

Au démontage du réacteur, qui a produit 15,2 tonnes d'hexafluorure de soufre, on constate que le pulvérisateur à soufre n'a subi aucune corrosion; on note seulement une très légère augmentation du diamètre de son orifice. Le tube du réacteur ne présente pas non plus de corrosion; il s'est simplement recouvert de la couche de passivation normale de fluorures métalliques.

**Revendications**

1. Procédé continu de fabrication de l'hexafluorure de soufre par réaction du soufre avec le fluor dans un réacteur tubulaire à flamme, caractérisé en ce que le soufre fondu est pulvérisé sous pression hydraulique au sommet du réacteur dans un courant de fluor gazeux, sans introduction d'un gaz inerte.

2. Procédé selon la revendication 1, caractérisé en ce que le débit de fluor est asservi au débit de soufre.

3. Procédé selon la revendication 2, caractérisé en ce que le débit de fluor représente un excès de 1 à 5% par rapport à la stoechiométrie de production de l'hexafluorure de soufre.

4. Procédé selon l'une quelconque des revendications 1 à 3, caractérisé en ce que la température du soufre fondu est maintenue entre 145 et 158 °C.

5. Procédé selon l'une quelconque des revendications 1 à 4, caractérisé en ce que le soufre fondu est pulvérisé dans le réacteur au moyen d'un pulvérisateur pulvérisant en cône creux.

6. Procédé selon l'une quelconque des revendications 1 à 5, caractérisé en ce que le réacteur est refroidi, par circulation forcée d'air dans une souble-enveloppe.

7. Procédé selon la revendication 6, caractérisé en ce que de l'eau est pulvérisée dans l'air de refroidissement.

8. Procédé selon l'une quelconque des revendications 1 à 5, caractérisé en ce que le réacteur est refroidi par circulation d'eau dans une double-enveloppe.

**Claims**

1. Continuous process for the manufacture of sulphur hexafluoride by reacting sulphur with fluorine in a tubular flame reactor, characterized in that the molten sulphur is finely sprayed under hydraulic pressure, at the top of the reactor, into a stream of gaseous fluorine, without introduction of an inert gas.

2. Process according to Claim 1, characterized in that the fluorine feed rate is made dependent on the sulphur feed rate.

3. Process according to Claim 2, characterized in that the fluorine feed rate represents an excess of 1 to 5% relative to the stoichiometric amount required for the production of sulphur hexafluoride.

4. Process according to any one of Claims 1 to 3, characterized in that the temperature of the molten sulphur is kept at between 145 and 158 °C.

5. Process according to any one of Claims 1 to 4, characterized in that the molten sulphur is finely sprayed into the reactor by means of an atomizer which finely sprays it as a hollow cone.

6. Process according to any one of Claims 1 to 5, characterized in that the reactor is cooled by forced circulation of air in a jacket.

7. Process according to Claim 6, characterized in that water is finely sprayed into the cooling air.

8. Process according to any one of Claims 1 to 5, characterized in that the reactor is cooled by circulation of water in a jacket.

**Patentansprüche**

1. Kontinuierliches Verfahren zur Herstellung von Schwefelhexafluorid durch Reaktion von Schwefel mit Fluor in einem Flammenrohrreaktor, dadurch gekennzeichnet, dass der geschmolzene Schwefel unter hydraulischem Druck im oberen Teil des Reaktors in einen Strom von gasförmigem Fluor ohne Zufuhr eines Inertgases eingesprüht wird.

2. Verfahren nach Anspruch 1, dadurch gekennzeichnet, dass die Zuführmenge des Fluors der Zuführmenge des Schwefels angepasst wird.

3. Verfahren nach Anspruch 2, dadurch gekennzeichnet, dass die Zuführmenge des Fluors einen Überschuss von 1 bis 5%, bezogen auf die Stöchiometrie der Herstellung von Schwefelhexafluorid, aufweist.

4. Verfahren nach einem der Ansprüche 1 bis 3, dadurch gekennzeichnet, dass die Temperatur des geschmolzenen Schwefels zwischen 145 und 158 °C gehalten wird.

5. Verfahren nach einem der Ansprüche 1 bis 4, dadurch gekennzeichnet, dass der geschmolzene Schwefel mittels eines Zerstäubers in Form eines Hohlkegels in den Reaktor eingesprüht wird.

6. Verfahren nach einem der Ansprüche 1 bis 5, dadurch gekennzeichnet, dass der Reaktor durch Zwangszirkulation von Luft in einem Doppelmantel abgekühlt wird.

7. Verfahren nach Anspruch 6, dadurch gekennzeichnet, dass Wasser in die Kühlluft eingesprüht wird.

8. Verfahren nach einem der Ansprüche 1 bis 5, dadurch gekennzeichnet, dass der Reaktor durch Zirkulation von Wasser in einem Doppelmantel abgekühlt wird.